# EUROPÄISCHE PATENTSCHRIFT

(11) **EP 3 401 743 B1**
(45) Veröffentlichungstag und Bekanntmachung des Hinweises auf die Patenterteilung: **22.01.2020**
(21) Anmeldenummer: 18166462.4
(22) Anmeldetag: 10.04.2018
(51) Int. Cl.: G05B 19/042, G05B 19/418

(54) **VERFAHREN ZUR AUFSTELLUNG EINER MENÜSTRUKTUR AUF EINEM MESSUMFORMER UND MESSUMFORMER**
TRANSDUCER AND METHOD FOR SETTING UP A MENU STRUCTURE ON A TRANSDUCER
PROCÉDÉ DE MISE EN PLACE D'UNE STRUCTURE DE MENU SUR UN TRANSDUCTEUR DE MESURE ET TRANSDUCTEUR DE MESURE

(30) Priorität: 05.05.2017 DE 102017109711
(43) Veröffentlichungstag der Anmeldung: 14.11.2018
(73) Patentinhaber: Endress + Hauser Conducta GmbH+Co. KG, 70839 Gerlingen (DE)
(72) Erfinder: Robl, Stefan, 46569 Hünxe (DE)
(74) Vertreter: Andres, Angelika Maria

(56) Entgegenhaltungen:
- DE-A1-102010 062 661
- DE-A1-102013 109 213
- US-A1- 2012 079 425

## Beschreibung

Die Erfindung betrifft ein Verfahren zur Aufstellung einer Menüstruktur auf einem Messumformer der Prozessautomatisierungstechnik. Die Erfindung betrifft weiter einen Messumformer zur Ausführung des Verfahrens.

Ein Messumformer oder auch Transmitter genannt ist ganz allgemein ein Gerät, das eine Eingangsgröße entsprechend einer festen Beziehung in eine Ausgangsgröße umformt. In der Prozessautomatisierungstechnik wird an einen Messumformer etwa ein Feldgerät angeschlossen. Das Feldgerät ist etwa ein Sensor. Dessen Rohmesswerte werden im Messumformer aufbereitet, etwa gemittelt oder mittels eines Kalibrierungsmodells in eine andere Größe umgewandelt, etwa die zu bestimmende Prozessgröße, und eventuell weitergeleitet, beispielsweise an ein Leitsystem.

Üblicherweise wird an den Messumformer ein Kabel zur Verbindung an den Sensor angeschlossen. Der Messumformer ist dabei ein separates Gerät mit einem separaten Gehäuse und verschiedenen Schnittstellen. Alternativ kann der Messumformer, etwa in Form eines Schaltkreises, gegebenenfalls als Mikrocontroller o.ä. in ein Kabel oder direkt in eine Steckverbindung (siehe unten) integriert werden.

Die Verbindung Kabel zu Sensor erfolgt häufig über eine Steckverbindung, beispielsweise durch galvanisch entkoppelte, insbesondere induktive Schnittstellen. Somit können kontaktlos elektrische Signale übertragen werden. Durch diese galvanische Trennung zeigen sich Vorteile hinsichtlich Korrosionsschutz, Potentialtrennung, Verhinderung mechanischer Abnutzung der Stecker usw. Von der Anmelderin werden solche Systeme unter der Bezeichnung Memosens vertrieben.

An den Messumformer können verschiedenste Sensoren angeschlossen werden. Unter der oben genannten Bezeichnung Memosens werden von der Anmelderin Sensoren zur Messung von pH-Wert, Leitfähigkeit, Sauerstoff, Trübung und weitere vertrieben.

Das an den Messumformer angeschlossene Feldgerät, also etwa der Sensor, wird über den Messumformer parametriert und andere Einstellungen geändert. Der Messumformer verfügt dazu über ein Display und Möglichkeiten Eingaben zu tätigen, etwa über Knöpfe, Schalter, Touchdisplay oder über externe Geräte, die über eine drahtlose oder drahtgebundene Schnittstelle (wie USB, serielle oder parallele Schnittstelle, RS-232, Bluetooth, u.a.) an den Messumformer angeschlossen werden.

Im Display wird ein entsprechendes Menü angezeigt. Im Sinne der vorliegenden Anmeldung wird der Begriff Menüstruktur verwendet. Die Menüstruktur umfasst die Gesamtheit aller Menüseiten und die Navigation darin. Die Menüstruktur beschreibt somit die Hierarchie, Führung und Texte der verschiedenen Menüseiten, die auf dem Display des Messumformers zur Benutzerführung dargestellt werden. Die Menüstruktur ermöglicht, eine gewünschte Einstellung oder einen Befehl aus einem Angebot auszuwählen und manipulieren bzw. ausführen zu lassen. Über die Menüstruktur werden Einstellungen sowohl am Messumformer als auch für das daran angeschlossenen Feldgerät (z.B. dem Sensor) vorgenommen.

Die Menüstruktur unterscheidet sich je nach angeschlossenem Feldgerät, also nach Sensortyp, da jeder Sensortyp über unterschiedliche Messgrößen, Parameter und Funktionen verfügen kann. In anderen Worten erfordert jedes der angeschlossenen Feldgeräte, also auch jeder angeschlossene Sensor, vom Messumformer eine für ihn spezielle Software. Dies gilt zum einen für den Gerätetreiber, aber eben auch für die Menüstruktur. Der Messumformer muss wissen, welche Art von Sensor angeschlossen ist um die entsprechende Menüstruktur für den Sensor bereit zu halten. Jeder Sensor besitzt dazu eine für seinen Typ eindeutige Identifikation, die beim Anschluss des Sensors an einen Messumformer gesendet wird. Für einen für den Messumformer bekannten Sensor wird dann neben der Menüstruktur auch entsprechend Signalverarbeitungsroutinen, Parameter, Feldbusanbindung etc. im Messumformer bereitgestellt. Wie erwähnt wird über den Messumformer der Sensor parametriert, eingestellt und auf den zu messenden Prozess angepasst.

Da sehr viele verschiedene Sensoren an den Messumformer anschließbar sind und die Software samt Menüstruktur im Messumformer für einen Sensor umfangreich ist, ist die Erzeugung, Wartung und das Testen der Betriebssoftware des Messumformers sehr komplex und aufwändig.

Soll ein neuer Sensor vom Messumformer unterstützt werden, etwa eine neue Generation eines bekannten Sensors oder ein komplett neuer Sensor, muss die Betriebssoftware des Messumformers, gegebenenfalls komplett, angepasst werden. Diese neue Software muss an alle bisherigen Messumformer verteilt werden. Erst nach dieser Verteilung sind alle Messumformer in der Lage, den neuen Sensor komplett zu unterstützen.

Die US 2012/0079425 A1, die DE 10 2013 109 213 A1 und die DE 10 2010 062 661 A1 stellen einschlägigen Stand der Technik dar.

Der Erfindung liegt die Aufgabe zugrunde, die Erstellung und Wartbarkeit der Software des Messumformers zu vereinfachen und zugleich eine nachträgliche Erweiterbarkeit eines Messumformers zu erreichen, ohne dessen Betriebssoftware austauschen zu müssen. Insbesondere soll es dem Anwender ermöglicht werden ein an den Messumformer angeschlossenes Feldgerät über die Menüstruktur anzusteuern, auch wenn das Feldgerät zum Auslieferungszeitpunkt des Messumformers noch unbekannt war.

Die Aufgabe wird gelöst durch ein Verfahren, umfassend zumindest die Schritte: Verbinden eines Feldgeräts mit einem Messumformer; Übertragen einer feldgerätespezifischen Menüstruktur vom Feldgerät an den Messumformer, wenn sich diese noch nicht auf dem Messumformer befindet; und Vereinen der feldgerätespezifischen Menüstruktur mit einer messumformerspezifischen Menüstruktur zu einer gemeinsamen Menüstruktur, wobei sich die messumformerspezifische Menüstruktur im Messumformer befindet, mittels zumindest einem Ankerpunkt oder einem Platzhalter in der messumformerspezifischen Menüstruktur, wobei durch den Ankerpunkt oder den Platzhalter festgelegt ist, wo sich die feldgerätespezifischen Menüstruktur in die messumformerspezifische Menüstruktur eingliedert, wobei es sich bei dem Ankerpunkt um eine Referenz auf eine vollständige Menüseite der feldgerätespezifischen Menüstruktur handelt, wobei der Ankerpunkt in der gemeinsamen Menüstruktur nur dargestellt wird, wenn in der feldgerätespezifischen Menüstruktur eine entsprechende Menüseite existiert, und wobei es sich bei dem Platzhalter um zumindest ein Element der feldgerätespezifischen Menüstruktur innerhalb einer Menüseite der gemeinsamen Menüstruktur handelt.

Um einen generischen Ansatz für verschieden Feldgeräte, die an den Messumformer angeschlossen werden, zu ermöglichen, wird die Menüstruktur auf der Seite des Feldgeräts abgelegt und bei Bedarf an den Messumformer übertragen. Hierfür gibt es verschieden Szenarien: die Menüstruktur kann in einem Speicher, etwa im Cache, des Messumformers gespeichert sein, wenn der Messumformer bereits zu einem früheren Zeitpunkt einmal mit dem Feldgerät verbunden war. Der Cache speichert Menüstruktur zwischen und erlaubt so, dass zu einem späteren Zeitpunkt die Daten nicht noch einmal erneut übertragen werden müssen.

Zum anderen kann die Menüstruktur durchaus auch bereits fest in den Messumformer integriert sein (bei dessen Auslieferung) und nur aus modularen Gründen nicht in die Hauptmenüstruktur integriert sein (Plug&Play, nur die Beschreibungen sind in Benutzung, die auch tatsächlich verwendet werden).

In einer Ausgestaltung wird dem Messumformer die Menüstruktur via Internet oder Speichermedium zugespielt und bietet erst dann eine Menüstruktur auch für das verbundene Feldgerät.

Eine Menüseite ist eine Ansammlung von Elementen, die statische Texte, Parameter oder Verknüpfungen zu anderen Menüseiten sein können.

Ein Ankerpunkt ist eine Referenz auf eine vollständige Menüseite. Ein Ankerpunkt ist also ein Untermenüpunkt, bei dessen Auswahl der Anwender auf eine andere Menüseite geführt wird. Platzhalter sind ein oder mehrere einzelne Elemente einer fremden Menüstruktur, die innerhalb einer Menüseite eingefügt werden. Innerhalb einer Seite können einzelne Elemente aus einer fremden Menüstruktur stammen; sie werden etwa über einen Platzhalter referenziert und falls vorhanden - eingefügt. Ist dieser Platzhalter nicht vorhanden, so werden diese entsprechend nicht dargestellt.

Die Sichtbarkeit eines Platzhalters unterliegt effektiv der gleichen Bedingung wie beim Ankerpunkt: Ist der Platzhalter nicht in der feldgerätespezifischen Menüführung existent, wird er nicht dargestellt.

Umgekehrt können die referenzierten Elemente eines Platzhalters jedes für sich Sichtbarkeitsbedingung beinhalten, d.h. ein Platzhalter kann sehr wohl existieren, dennoch wird nichts dargestellt, weil zu einem gegebenen Zeitpunkt die referenzierten Elemente nicht sichtbar sein sollen, z.B. wegen eines bestimmten Betriebszustand des Geräts.

In einer Ausgestaltung handelt es sich bei dem Feldgerät um einen Sensor.

In einer Ausgestaltung wird innerhalb der feldgerätespezifischen und messumformerspezifischen Menüstruktur zwischen hierarchisch strukturierten Daten und deren Darstellung unterschieden, wobei es sich bei den hierarchisch strukturierten Daten zumindest um statische Texte oder Parameter handelt.

Es findet also ein Unterscheidung zwischen Struktur und deren Darstellung statt. Somit ist eine Darstellung auf vielen Endgeräten möglich; letztlich entscheidet das Endgerät wie die Daten dargestellt werden.

In einer Ausgestaltung wird die Darstellung in Form von Stylesheets, mit etwa der Stylesheetsprache CSS, gespeichert. Im Allgemeinen liegt die Darstellung also als explizite, separierbare Beschreibung vor. Die Beschreibung der Darstellung ist somit einfach austauschbar.

In einer Ausgestaltung wird die Interpretation und Darstellung der Menüstruktur durch eine im Messumformer enthaltene Darstellungseinheit implizit festgelegt, d.h. es existiert in diesem Fall keine explizite, separierbare und damit austauschbare Darstellungsvorschrift.

In einer Ausgestaltung werden ausschließlich die hierarchisch strukturierten Daten vom Feldgerät an den Messumformer übertragen werden.

In einer Ausgestaltung umfasst der Messumformer einen ersten Interpreter, der die feldgerätespezifische und messumformerspezifische Menüstruktur zur Laufzeit einliest, analysiert und ausführt und die gemeinsame Menüstruktur aufstellt.

Im Allgemeinen ist ein Interpreter ist ein Computerprogramm, das einen Programm-Quellcode im Gegensatz zu Assemblern oder Compilern nicht in eine auf dem System direkt ausführbare Datei übersetzt, sondern den Quellcode einliest, und während der Analyse Schritt für Schritt abarbeitet. Die Analyse des Quellcodes erfolgt zur Laufzeit des Programmes. Über spezielle Interpreter können auch andere Beschreibungssprachen (z.B. HTML) zu einem der Beschreibung passenden Systemverhalten führen. Im Sinne der Ausgestaltung ist beispielsweise ein Interpreter vorgesehen (erster Interpreter), der die Menüstruktur verarbeitet und zu einer visuellen Darstellung führt.

In einer Ausgestaltung referenziert die messumformerspezifische Menüstruktur messumformerspezifische Parameter, die im Messumformer in einer ersten Datenbank gespeichert sind, wobei die feldgerätespezifische Menüstruktur feldgerätespezifische Parameter umfasst, die in einer dem Feldgerät zugeordneten zweiten Datenbank gespeichert sind, wobei der Messumformer eine Verwaltungseinheit zumindest zur Verwaltung der Parameter umfasst, und die Verwaltungseinheit den angefragten Parameter aus der ersten oder zweiten Datenbank bezieht.

In einer Ausgestaltung umfasst das Feldgerät die zweite Datenbank und die feldgerätespezifischen Parameter sind darin gespeichert.

Die Menüstruktur wird in einer abstrakten Form in einer Metasprache formuliert. Wie erwähnt wird in dieser Metasprache nicht formuliert, wie Daten und Elemente, sondern welche Daten und Elemente auf welchen Menüseiten dargestellt werden. Beispielsweise wird formuliert, dass auf einer Hauptebene verschiedene Buttons, editierbare Textboxen, Auswahlmenüs etc. dargestellt werden sollen. Zudem wird darin formuliert, welche Parameter innerhalb der einzelnen Elemente dargestellt werden sollen.

In einer Ausgestaltung wird jedem Parameter, sei es ein feldgerätespezifischer oder ein messumformerspezifischer Parameter, nach Vereinigung der beiden Menüstrukturen ein eindeutiger Identifikator zugewiesen.

Die Parameter werden in der Menüstruktur also durch den Identifikator referenziert. Die oben genannten Informationen bezüglich der Menüstruktur, also etwa welche Daten und Elemente auf welchen Seiten darzustellen sind, werden in ein bestimmtes Format, beispielsweise in Form einer hierarchischen Baumstruktur, gebracht. In einer Ausgestaltung handelt es sich um eine Binärdatei. In einer Ausgestaltung handelt es sich um menschenlesbaren Text, beispielsweise in Form einer XML-Datei.

Als Gegenstück zu der oben genannten Strukturinformation gibt es den bereits oben genannten ersten Interpreter. Der erste Interpreter hat die Aufgabe, die abstrakten Formulierungen der Menüstruktur zu interpretieren und auf dem Messumformer gerätespezifisch darzustellen. Ein Teil des ersten Interpreters ist für jedes Endgerät spezifisch implementiert, um eine korrekte Darstellung auf seiner zugrunde liegenden Anzeigeeinheit zu ermöglichen.

Der erste Interpreter stellt die über die Menüstruktur beschriebenen Elemente dar und besitzt die Aufgabe, die referenzierten Parameter in die Darstellung zu integrieren. Hierzu verfügt der erste Interpreter über eine Schnittstelle zur oben bereits erwähnten zweiten Datenbank (im Feldgerät, respektive Sensor), um die tatsächlichen Parameterwerte zu den in der Menüstruktur hinterlegten Identifikatoren zu erhalten, siehe Details unten.

Der erste Interpreter löst die Parameterreferenzen anhand ihrer Identifikatoren auf, indem diese über die bereits erwähnte Verwaltungseinheit, also die Einheit zumindest zur Verwaltung der Parameter, ausgelesen werden. Die Verwaltungseinheit reicht die Anfrage an die jeweilige Datenbank weiter, welche den zugehörigen Wert anschließend liefert.

Alle messumformerspezifischen Parameter (wie z.B. Uhrzeit, Einstellung des Stromausgangs, etc.) werden in der bereits erwähnten ersten Datenbank gespeichert, von ihr bezogen und vom ersten Interpreter abgefragt. Dies wird im Folgenden näher erläutert.

Der erste Interpreter im Messumformer hat durch das Übertragen der feldgerätespezifischen Menüstruktur auf den Messumformer (wenn sich diese noch nicht auf dem Messumformer befindet) Zugriff auf eben diese Menüstruktur, wobei diese ausschließlich feldgerätespezifisch ausgestaltet ist. Um sowohl Menüseiten des Messumformers als auch des Feldgeräts darzustellen, benötigt der erste Interpreter sowohl eine feldgerätespezifische als auch eine messumformerspezifische Menüstruktur.

Der Messumformer umfasst eine Datenbank, in den Worten der vorliegenden Anmeldung eine erste Datenbank , welche alle messumformerspezifischen Inhalte beschreibt. Diese erste Datenbank verwaltet ausschließlich messumformerspezifische Parameter. Soll eine Menüseite mit messumformerspezifischen Inhalten dargestellt werden, wird die messumformerspezifische Menüstruktur vom ersten Interpreter ausgewertet. Werden messumformerspezifische Parameter von der Menüstruktur referenziert, so leitet die Verwaltungseinheit die Zugriffe dementsprechend an die erste Datenbank, die dem Messumformer zugeordnet ist, weiter.

Wird vom Anwender im Menü auf eine Seite gewechselt, welche feldgerätespezifische Inhalte darstellen soll, wie z.B. die aktuellen Messwerte, wird von der Verwaltungseinheit auf die zweite Datenbank (im Feldgerät) zugegriffen und entsprechend vom ersten Interpreter ausgewertet. In der zweiten Datenbank werden ausschließlich feldgerätespezifische Parameter verwaltet. Die Parameter werden mit dem gleichen Mechanismus wie zuvor über die Verwaltungseinheit des Messumformers unter Angabe des zugehörigen Identifikators geladen. Sämtliche feldgerätespezifischen Parameter liegen physisch nicht in der Verwaltungseinheit des Messumformers. Stattdessen verfügt die Verwaltungseinheit über eine Schnittstelle zur zweiten Datenbank.

Alle Parameter des Feldgeräts sind in einer eigenen Datenbank gespeichert, im Sinne dieser Anmeldung innerhalb der zweiten Datenbank . Findet die Verwaltungseinheit des Messumformers einen referenzierten Parameter nicht, da ihm der entsprechende Identifikator unbekannt ist und damit dieser physisch nicht in der ersten Datenbank vorhanden sein kann, sendet die Verwaltungseinheit eine Anfrage an die zweite Datenbank. Wird der Identifikator gefunden, wird der entsprechende Parameter zurückgegeben.

Über diesen Mechanismus benötigt der erste Interpreter ausschließlich die Schnittstelle zu einer Verwaltungseinheit. Die Verwaltungseinheit übernimmt die Aufgabe, sowohl messumformerspezifische als auch feldgerätespezifische Parameter an den ersten Interpreter zu liefern.

In einer Ausgestaltung verwenden messumformerspezifische und feldgerätespezifische Parameter unterschiedliche und eindeutige Identifikatoren, um eine Unterscheidung vornehmen zu können.

In einer Ausgestaltung überschneiden sich die Identifikatoren der an den Messumformer angeschlossenen Feldgeräte mit denen des Messumformers. Dann wird durch den Messumformer beim Laden der Menüstruktur des Feldgeräts überprüft, innerhalb welches Indexbereichs sich die Feldgeräteparameter befinden. Der Messumformer entscheidet selbstständig, auf welchen Indexbereich die Feldgeräteparameter gemappt werden. Die Feldgeräteparameter können abweichend von einer eventuellen Vorgabe innerhalb der feldgerätespezifischen Menüstruktur etwa durch einen konstanten Offset im Messumformer auf einen anderen Indexbereich gemappt werden. Hierzu wird durch den ersten Interpreter beispielsweise auf alle referenzierten Parameter der zweiten Datenbank ein konstanter Offset addiert. Zusätzlich subtrahiert die Verwaltungseinheit, falls der referenzierte Parameter nicht bekannt ist, den entsprechenden Offset, bevor die Anfrage an die zweite Datenbank weitergeleitet wird. Durch dieses Verfahren müssen keine weiteren Anforderungen an die Auswahl der Indexbereiche für die Parameter vorgegeben werden. Der Messumformer muss nun ausschließlich dafür sorgen, dass ein bestimmter zusammenhängender Bereich für Feldgeräteparameter bereitgestellt wird.

In einer Ausgestaltung umfasst der Messumformer zumindest einen zweiten Interpreter zur Ausführung einer Erweiterung, wobei nach Anschluss des Feldgeräts an den Messumformer feldgerätespezifische Software vom Feldgerät an den Messumformer übertragen wird, wenn sich diese noch nicht auf dem Messumformer befindet, wobei die feldgerätespezifische Software als Erweiterung ausgestaltet ist, wobei die feldgerätespezifische Software die feldgerätespezifische Menüstruktur umfasst, und wobei die feldgerätespezifische Software die zweite Datenbank umfasst und die feldgerätespezifischen Parameter darin gespeichert sind.

In einer Ausgestaltung ist der zweite Interpreter als Emulator, genauer als Software-Emulator, ausgestaltet. Ein Emulator ist ein Interpreter, da dieser den Maschinencode des Gastsystems befehlsweise oder in Befehlssequenzen auf einem virtuellen Prozessor abarbeitet. In anderen Worten ist der Emulator eine Ausführungseinheit, die Maschinencode einer bestimmten Architektur ausführt. Als Emulator wird ein System bezeichnet, das ein anderes in bestimmten Teilaspekten nachbildet. Das nachgebildete System erhält die gleichen Daten, führt vergleichbare Programme aus und erzielt die möglichst gleichen Ergebnisse in Bezug auf bestimmte Fragestellungen wie das zu emulierende System. Software-Emulatoren sind Programme, die Recheneinheiten nachbilden und es so ermöglichen, Software für genau diese Recheneinheit auf einer Recheneinheit mit einer anderen Architektur zu verwenden.

Der zweite Interpreter kann auch in der Sonderform eines Emulators, nämlich in einer virtuellen Maschine ausgeführt sein. Die virtuelle Maschine kann Teile des Maschinencodes des Gastsystems auf dem Hostsystem direkt ausführen. Die Definition von Emulator bzw. virtueller Maschine ist in der Literatur nicht eindeutig und verschwimmt. Im Sinne dieser Anmeldung führt eine virtuelle Maschine große Teile ihrer Befehle nativ auf der CPU des Hostsystems aus. Da viele Befehle direkt auf der CPU des Hostsystems ausgeführt werden, muss für das Gastsystem die gleiche CPU-Architektur verwendet werden wie auf dem Hostsystem. Es ist dabei die Unterstützung des Prozessors und/oder des Betriebssystems des Hostsystems notwendig, um die Abstraktion zwischen Gast- und Hostsystem zu ermöglichen. Bei der Emulation hingegen besteht diese Notwendigkeit nicht. Bei der Emulation kann ein von der Hardware oder CPU abweichender Code ausgeführt werden. Ein gängiges Verfahren ist die Software-Emulation, welche sämtliche Funktionen von einzelnen Hardwarekomponenten in Software nachbildet. Dadurch können Programme ausgeführt werden, die für eine andere CPU geschrieben wurden. Die Software-Emulation ist somit plattformunabhängig realisierbar.

In einer Ausgestaltung ist der zweite Interpreter als Skriptspracheninterpreter ausgestaltet.

In einer Ausgestaltung kann die Skriptsprache Lua sein. Lua ist eine imperative Skriptsprache, die sowohl funktionale als auch objektorientierte Programmierung ermöglicht. Ein Vorteil von Lua ist die geringe Größe des kompilierten Skript-Interpreters und die hohe Ausführungsgeschwindigkeit. Lua-Programme können plattformunabhängig entwickelt werden.

In einer Ausgestaltung können auf einem Messumformer ein oder mehrere Skriptspracheninterpreter und/oder Emulatoren parallel gestartet und auch parallel betrieben werden.

Ist der zweite Interpreter gestartet, wird anschließend darauf eine Erweiterung ausgeführt. Eine Erweiterung ist Software, die nicht primär Teil des Messumformers ist, d.h. diese ist explizit nicht Bestandteil der Betriebssoftware. Die Erweiterung wird zur Laufzeit geladen. Insbesondere wird die Erweiterung zur Laufzeit von einem Speicher geladen. Der Speicher kann dabei sowohl als fest in der Hardware des Messumformers integrierter Speicher (z.B. Flash-Speicher), in Form eines dem Benutzer zugänglichen Wechselspeichers (z.B. Speicherkarte) oder auch in Form eines Netzwerkspeichers, welcher durch Datenkommunikation adressiert wird (z.B. Dateiserver) realisiert sein.

Im Allgemeinen ist die Erweiterung somit Softwarecode, der in einer bestimmten (Programmier-) Sprache formuliert ist und auf dem Messumformer ausgeführt wird. Ist der zweite Interpreter als Emulator ausgestaltet, ist die Erweiterung in Maschinencode formuliert. Ist der zweite Interpreter als Skriptspracheninterpreter ausgestaltet, ist die Erweiterung als spezifischer Softwarecode, im oben genannten Beispiel als Lua-Code formuliert.

In einer Ausgestaltung sind pro Messumformer mehrere zweite Interpreter ausführbar. In einer Ausgestaltung ist der zweite Interpreter dynamisch instanziierbar. Der Programmcode des zweiten Interpreters befindet sich einmal auf dem Messumformer, genauer auf einem Speicher des Messumformers, und wird bei einem Aufruf einer Instanz abgearbeitet. Eine Instanz ist dabei ein konkretes Vorkommen eines Objekts, hier also des zweiten Interpreters, das (nur) während seiner Laufzeit existiert. In einer Ausgestaltung ist sind bereits mehrere zweite Interpreter statisch geladen.

In einer Ausgestaltung wird je zweitem Interpreter genau eine Erweiterung ausgeführt. Dies führt dazu, dass die Erweiterungen unabhängig voneinander ausgeführt werden können. Andernfalls müssten die Erweiterungen potentiell voneinander wissen bzw. so ausgestaltet sein, dass sie die Ressourcen eines zweiten Interpreters gemeinsam teilen. Dies erhöht die Querabhängigkeiten.

Wie erwähnt verfügt jeder Messumformer über einen eigenen ersten Interpreter, welcher die feldgerätespezifische Menüstruktur interpretiert und entsprechend systemspezifisch darstellt. Dieses Konzept bietet neben der generischen Ankopplung von Feldgerät und Messumformer den Vorteil, dass die Menüstruktur durch einen eigenen Interpreter (den ersten Interpreter) abgearbeitet wird, der losgelöst vom zweiten Interpreter arbeitet. Die Menüstruktur muss somit nicht mit einem zusätzlichen Performanceverlust durch den zweiten Interpreter abgearbeitet werden.

Hinsichtlich des zweiten Interpreters und der zweiten Datenbank soll im Folgenden auf die Parameterverwaltung eingegangen werden.

Alle Parameter des Feldgeräts sind in einer eigenen Datenbank gespeichert, im Sinne dieser Anmeldung innerhalb einer zweiten Datenbank . Findet die Verwaltungseinheit des Messumformers einen referenzierten Parameter nicht, da ihm der entsprechende Identifikator unbekannt ist und damit dieser physisch nicht in der Verwaltungseinheit vorhanden sein kann, sendet die Verwaltungseinheit eine Anfrage an die zweite Datenbank, welche durch die feldgerätespezifische Software umfasst ist und durch den zweiten Interpreter ausgeführt wird. Der zweite Interpreter prüft, ob der Identifikator bekannt ist und liefert der Verwaltungseinheit den entsprechenden Parameter. Dieser wird von der Verwaltungseinheit an den ersten Interpreter zurückgegeben. Über diesen Mechanismus benötigt der erste Interpreter ausschließlich die Schnittstelle zur Verwaltungseinheit, welches ihm als transparente Datenbank erscheint. Die Verwaltungseinheit übernimmt die Aufgabe, sowohl messumformerspezifische als auch feldgerätespezifische Inhalte an den ersten Interpreter zu liefern.

In einer Ausgestaltung wird die darzustellende Menüseite erst gerendert, wenn alle auf der Menüseite darzustellenden hierarchisch strukturierten Daten auf dem Messumformer vorhanden sind. Ist eine Menüseite gerade darzustellen befinden sich die entsprechenden Daten im Speicher der Recheneinheit auf dem Messumformer. Damit die Menüseite aufgebaut werden kann, muss die Vereinigung der feldgerätespezifischen und die messumformerspezifischen Menüstruktur bekannt sein, und die Texte und Parameter aus der entsprechenden Datenbank müssen abgeholt werden. Die Struktur an sich ist konstant und wird deswegen dauerhaft im Speicher des Messumformers, etwa in einem Flash-Speicher, gespeichert.

In einer Ausgestaltung wird die feldgerätespezifische Menüstruktur mit der messumformerspezifischen Menüstruktur menüseitenweise vereint. In anderen Worten werden hierbei Elemente, die messumformerspezifisch sind nicht mit Elementen, die feldgerätespezifisch sind, auf einer Seite zugleich dargestellt. Dies ermöglicht eine einfachere Implementierung.

In einer Ausgestaltung wird die feldgerätespezifische Menüstruktur mit der messumformerspezifischen Menüstruktur elementweise innerhalb einer Menüseite vereint. In anderen Worten werden hierbei Elemente, die messumformerspezifisch sind mit Elementen, die feldgerätespezifisch sind, auf einer gemeinsamen Seite dargestellt. Dies ermöglicht eine einfachere Darstellung für den Anwender.

In einer Ausgestaltung ist die Menüstruktur vom Zustand referenzierter Parameter abhängig. Gewisse Elemente der Menüstruktur werden also nur dargestellt, wenn beispielsweise ein bestimmter Parameter einen bestimmten Wert annimmt. Ein Beispiel hierfür ist die Sichtbarkeit eines Einstellwertes, der nur in einer bestimmten Betriebsart des Feldgerätes benötigt wird.

In einer Ausgestaltung definiert der Ankerpunkt einen Eintrittspunkt oder einen Austrittspunkt. Somit ist es für den Anwender möglich, sich nicht ausschließlich hierarchisch innerhalb der Menüstruktur zu bewegen, sondern es können auch Sprünge über die Hierarchie hinweg ermöglicht werden.

In einer Ausgestaltung umfasst die gemeinsame Menüstruktur eine Menüseite, welche alle Ankerpunkte der feldgerätespezifischen Menüstruktur umfasst, die der Messumformer anhand der ihm zu seiner Auslieferungszeit bekannten Ankerpunkte nicht eingliedern kann. Die Menüstruktur eines Feldgeräts, das nach dem Auslieferungszeitpunkt des Messumformers an den Messumformer angeschlossen wird, kann trotzdem dargestellt werden. Die älteren , und damit dem Messumformer bekannten, Teile der Menüstruktur werden anhand der eindeutigen Identifikatoren entsprechend dargestellt. Neue , und damit dem Messumformer unbekannte, Teile der Menüstruktur werden in einer Menüseite zusammengefasst.

Die Aufgabe wird weiter gelöst durch einen Messumformer zur Ausführung eines der oben beschriebenen Verfahren.

Dies wird anhand der nachfolgenden Figuren näherer erläutert. Es zeigen
Fig. 1a/b eine Messanordnung umfassend einen Messumformer in zwei verschiedenen Ausführungsformen,
Fig. 2 eine symbolische Darstellung einer gemeinsamen Menüstruktur,
Fig. 3a/b eine Menüseite eines Messumformers mit einem Ankerpunkt und eine Menüstruktur eines Sensors,
Fig. 4a/b/c eine Menüseite eines Messumformers mit einem Platzhalter, dessen Referenz und die daraus resultierende Menüseite,
Fig. 5a/b/c Screenshots vom Display eines Messumformer, die verschiedene Situationen der Menüstruktur zeigen, und
Fig. 6 ein Blockdiagramm der Verbindung eines Messumformers und eines Feldgeräts.

Der beanspruchte Messumformer 20 findet Anwendung in einer Sensoranordnung 10. Die Sensoranordnung 10 umfasst einen Sensor 1 und ein Anschlusselement 11, worauf zunächst eingegangen werden soll. Ohne Einschränkung der Allgemeinheit wird im Folgenden von Sensor 1 gesprochen, genauso kann aber auch ein Aktor o.ä. an den Messumformer 20 angeschlossen werden. Im Allgemeinen wird an den Messumformer 20 ein Feldgerät angeschlossen.

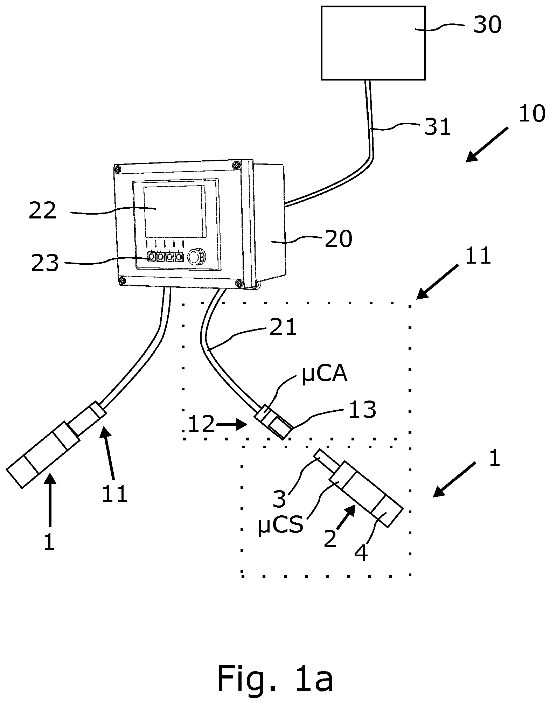

Fig. 1a repräsentiert eine Ausgestaltung einer Sensoranordnung 10.

Über eine erste physikalische Schnittstelle 3 kommuniziert ein Sensor 1 mit einem Messumformer 20. Ein alternatives Wort für Messumformer ist Transmitter. Der Messumformer 20 wiederum ist mit einer übergeordneten Einheit 30, etwa einem Leitsystem, über ein Kabel 31 verbunden. Am Messumformer 20 ist sensorseitig ein Kabel 21 angeschlossen, dessen anderes Ende eine zur ersten physikalischen Schnittstelle 3 komplementäre zweite physikalische Schnittstelle 13 umfasst. Ein Anschlusselement 11 umfasst das Kabel 21 samt zweiter physikalischer Schnittstelle 13. Die physikalischen Schnittstellen 3, 13 sind etwa als galvanisch getrennte, insbesondere als induktive Schnittstellen ausgestaltet. Die physikalischen Schnittstellen 3, 13 sind mittels einer mechanischen Steckverbindung miteinander koppelbar. Die mechanische Steckverbindung ist hermetisch dicht, so dass von außen keine Flüssigkeit, etwa das zu messende Medium, Luft oder Staub eindringen kann.

Über die physikalischen Schnittstellen 3, 13 werden Daten (bidirektional) und Energie (unidirektional, d.h. vom Anschlusselement 11 zum Sensor 1) gesendet bzw. übertragen. Die Sensoranordnung 10 wird überwiegend in der Prozessautomatisierung angewendet.

Der Sensor 1 umfasst zumindest ein Sensorelement 4 zum Erfassen einer Messgröße der Prozessautomatisierung. Bei dem Sensor 1 handelt es sich dann etwa um einen pH-Sensor, auch als ISFET, im Allgemeinen einen ionenselektiven Sensor, einen Sensor zur Messung des Redoxpotentials, von der Absorption von elektromagnetischen Wellen im Medium, beispielsweise mit Wellenlängen im UV-, IR-, und/oder sichtbaren Bereich, des Sauerstoffs, der Leitfähigkeit, der Trübung, der Konzentration von nicht-metallischen Werkstoffen oder der Temperatur mit der jeweils entsprechenden Messgröße.

Der Sensor 1 umfasst weiter einen ersten Kupplungskörper 2, welche die erste physikalische Schnittstelle 3 umfasst. Wie erwähnt ist die erste physikalische Schnittstelle 3 zur Übertragung eines von der Messgröße abhängigen Werts an eine zweite physikalische Schnittstelle 13 ausgestaltet. Der Sensor 1 umfasst eine Datenverarbeitungseinheit µCS, etwa einen Mikrocontroller, welcher die Werte der Messgröße verarbeitet, etwa in ein anderes Datenformat wandelt. Die Datenverarbeitungseinheit µCS ist von der Rechenkapazität und Speichervolumen aus Energie- und Platzgründen eher klein bzw. sparsam konzipiert. Der Sensor 1 ist somit nur zu einfachen Rechenoperation ausgestaltet, etwa einer zu Mittelung, Vorverarbeitung und Digitalwandlung.

Es können auch mehrere Sensoren 1 an einen Messumformer 20 angeschlossen werden. In Fig. 1a dargestellt sind zwei Sensoren 1, wobei nur einer der beiden mit allen Bezugszeichen versehen ist. Es können gleiche oder unterschiedliche Sensoren angeschlossen werden. Der linke der beiden ist im zusammengesteckten Zustand dargestellt. An den Messumformer 20 können beispielsweise bis zu acht Sensoren angeschlossen werden.

Der Sensor 1 ist über die physikalischen Schnittstellen 3, 13 mit dem Anschlusselement 11 und schließlich mit dem Messumformer 20 verbindbar. Die Datenverarbeitungseinheit µCS wandelt den von der Messgröße abhängigen Wert (also das Messsignal des Sensorelements 4) in ein dem Messumformer 20 verständliches Protokoll. Ein Beispiel hierfür ist etwa das proprietäre Memosens-Protokoll. Die erste und zweite physikalische Schnittstelle 3, 13 sind also zur bidirektionalen Kommunikation zwischen Sensor 1 und Messumformer 20 ausgestaltet. Wie erwähnt gewährleisten neben der Kommunikation die erste und zweite physikalische Schnittstelle 3, 13 auch die Energieversorgung des Sensors 1.

Das Anschlusselement 11 umfasst die zweite physikalische Schnittstelle 13, wobei die zweite physikalische Schnittstelle 13 komplementär zur ersten physikalischen Schnittstelle 3 ausgestaltet ist. Das Anschlusselement 11 umfasst ebenfalls eine Datenverarbeitungseinheit µCA. Die Datenverarbeitungseinheit µCA kann als Repeater für das gesendete Signal dienen. Weiter kann die Datenverarbeitungseinheit µCA das Protokoll wandeln oder ändern.

Das Anschlusselement 11 umfasst einen zweiten, zylindrischen Kupplungskörper 12, der komplementär zum ersten Kupplungskörper 2 ausgestaltet ist und welcher mit einem hülsenförmigen Endabschnitt auf den ersten Kupplungskörper 2 aufsteckbar ist, wobei die zweite physikalische Schnittstelle 13 in die erste physikalische Schnittstelle 3 gesteckt wird. Eine gegenteilige Anordnung, in der die zweite physikalische Schnittstelle 13 hülsenartig und die erste physikalische Schnittstelle 3 steckerartig ausgestaltet ist, ist ohne erfinderisches Zutun möglich.

Der Messumformer 20 umfasst ein Display 22 und ein oder mehrere Bedienelemente 23, etwa Knöpfe oder Drehknöpfe, über die der Messumformer 20 bedient werden kann. Über das Display 22 werden beispielsweise Messdaten des Sensors 1 angezeigt. Ebenso kann über die Bedienelemente 23 und der entsprechenden Ansicht im Display 20 der Sensor 1 konfiguriert und parametriert werden.

Der Messumformer 20 leitet (Kommunikation 35) die Messdaten über das Kabel 31, wie erwähnt etwa an ein Leitsystem 30, weiter. Das Leitsystem 30 ist dabei entweder als Prozessleitsystem (PLC, SPS), PC oder Server ausgestaltet.

Der Messumformer 20 wandelt die Daten dazu in ein für das Leitsystem verständliches Datenformat, etwa in einem entsprechenden Bus wie HART, Profibus PA, Profibus DP, Foundation Fieldbus, Modbus RS485 oder auch ein Ethernet basierter Feldbus wie EtherNet/IP, Profinet oder Modbus/TCP. Diese Daten werden dann über die Kommunikation 35 an das Leitsystem 30 weitergeleitet. Gegebenenfalls kann dies mit einem Webserver kombiniert werden, d.h. diese können parallel zueinander betrieben werden.

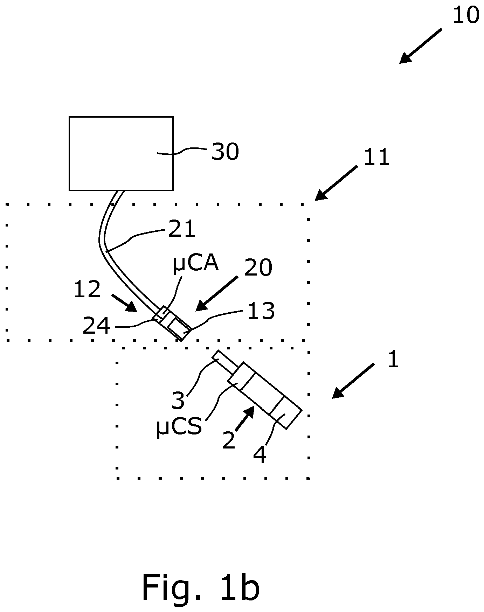

Fig. 1b repräsentiert eine Ausgestaltung einer Sensoranordnung 10. Dabei wird an einen Messumformer 20 jeweils nur ein Sensor 1 angeschlossen. Der Messumformer 20 ist hier symbolisch als Rechteck dargestellt und ist in seinen Abmessungen kleiner als der Messumformer aus Fig. 1a, und hat etwa die Größe einer Streichholzschachtel. Der Messumformer 20 kann hier entweder als separate, an das Kabel 21 ansteckbare Einheit ausgestaltet sein, oder wie hier dargestellt direkt in das Kabel 21 integriert sein. Der Messumformer 20 besteht somit im Wesentlichen aus der Datenverarbeitungseinheit µCA. Der Messumformer 20 umfasst kein Display und hat wenn überhaupt nur ein oder zwei Bedienelemente, die für einen Reset oder zum ein- und ausschalten konfiguriert sind. Bevorzugt umfasst der Messumformer 20 in dieser Ausgestaltung keine Bedienelemente. Der Messumformer 20 umfasst daher ein Drahtlosmodul 24, etwa ein Bluetooth-Modul mit dem Protokollstapel Bluetooth Low Energy. An den Messumformer 20 drahtlos verbindbar ist darüber ein Mobilgerät (nicht dargestellt), etwa ein Mobiltelefon, Tablet, Laptop etc. Über das Mobilgerät kann mittels der Drahtlosverbindung über das Drahtlosmodul 24 der Sensor konfiguriert und parametriert werden. Der Messumformer 20 wandelt die Rohmessdaten so, dass diese direkt an eine übergeordnete Einheit 30, also etwa das Leitsystem, weitergeleitet werden (Kommunikation 35). Wie erwähnt können beispielsweise Daten in einem proprietären Protokoll vom Sensor 1 an das Anschlusselement 11 übertragen werden, während die Datenverarbeitungseinheit µCA dieses proprietäre Protokoll in ein Busprotokoll (Modbus, Foundation Fieldbus, HART, Profibus, EtherNet/IP; siehe oben) wandelt. Die Messumformer in den Fig. 1a und Fig. 1b haben im Wesentlichen die gleiche Grundfunktionalität.

Wie erwähnt kann über die Bedienelemente 23 der Messumformer 20 oder daran angeschlossene Sensoren 1 bedient und parametriert werden. Dazu wird auf dem Display 22 ein Menü bzw. die Menüstruktur M dargestellt. Die Menüstruktur M beschreibt die Hierarchie, Führung und Texte der verschiedenen Menüseiten, die auf dem Display 22 dargestellt werden. Die Menüstruktur M ermöglicht, den gewünschten Befehl aus einem Angebot auszuwählen und ausführen zu lassen.

Es gibt Parameter und Einstellungen, die nur für den Messumformer 20 relevant sind und es gibt Parameter und Einstellungen, die nur für den Sensor 1 relevant sind. Entsprechend gibt es eine messumformerspezifische Menüstruktur M_{M} und eine sensorspezifische Menüstruktur M_{S} (im Allgemeinen eine feldgerätespezifische Menüstruktur). Im Rahmen dieser Anmeldung sind messumformerspezifische Menüseiten und dessen Struktur mit dem der Tiefstellung (Subskript) M gekennzeichnet; entsprechend die sensorspezifische mit der Tiefstellung S .

Wird ein Sensor 1 mit einem Messumformer 20 verbunden, wird eine feldgerätespezifischen Menüstruktur M_{S} vom Sensor 1 an den Messumformer 20 übertragen, wenn sich diese noch nicht auf dem Messumformer 20 befindet. Die sensorspezifische Menüstruktur M_{S} wird mit der messumformerspezifischen Menüstruktur M_{M} zu einer gemeinsamen Menüstruktur M vereint.

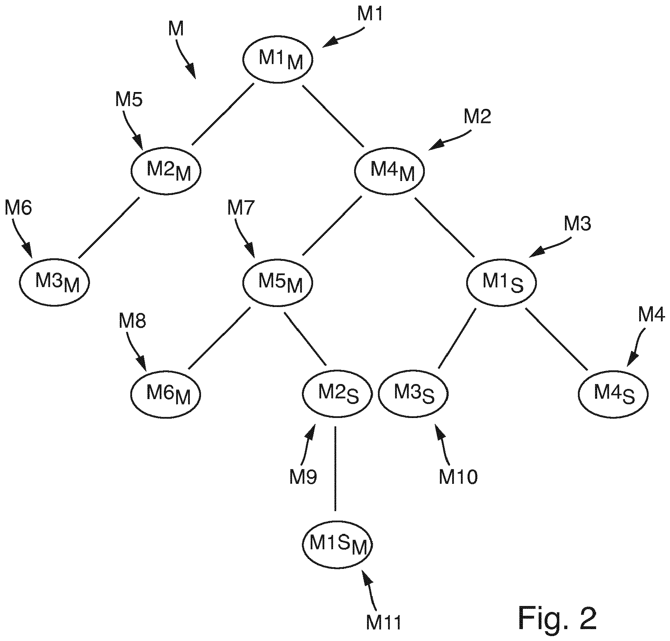

Fig. 2 zeigt eine symbolische Darstellung einer gemeinsamen Menüstruktur M. Dargestellt sind einige messumformerspezifischen Menüseiten M1_{M}-M6_{M}. Weiter dargestellt sind einige sensorspezifische Menüseiten M1_{S}-M4_{S}. Die gemeinsame Menüstruktur M wird gebildet aus allen Menüseiten M1-M11, welche alle messumformerspezifischen und alle sensorspezifischen Menüseiten umfasst.

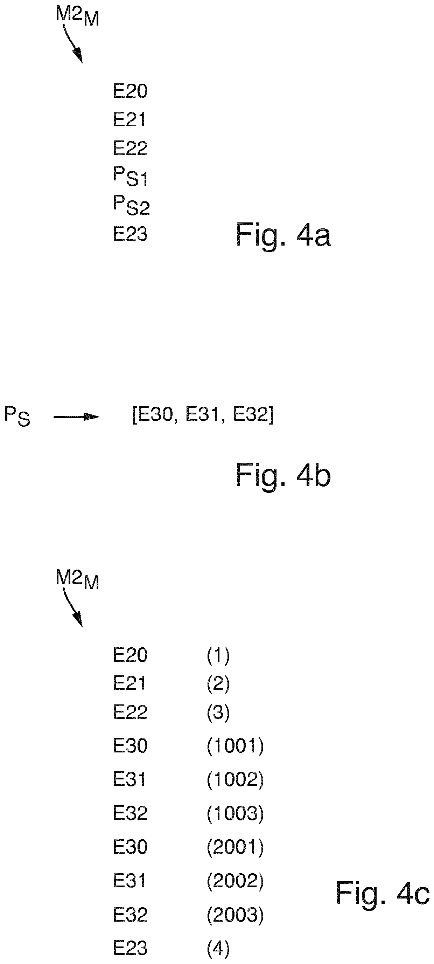

Bei den Menüseiten M1-M10 ist die sensorspezifische Menüstruktur Ms mit der messumformerspezifischen Menüstruktur M_{M} menüseitenweise vereint, d.h. auf einer Menüseite befinden sich entweder sensorspezifische oder messumformerspezifische Elemente. Die Menüseite M11 umfasst sowohl sensorspezifische als auch messumformerspezifische Elemente und hat deswegen das Bezugszeichen M1_{SM}. Dabei ist die sensorspezifische Menüstruktur mit der messumformerspezifischen Menüstruktur elementweise innerhalb einer Menüseite vereint, worauf weiter unten nochmal eingegangen wird (siehe etwa Fig. 4)

Eine Menüseite stellt hierarchisch strukturierten Daten da, wobei es sich bei diesen Daten etwa um statische Texte oder Parameter handelt. Jedem Parameter ist ein eindeutiger Identifikator ID zugeordnet. Ein Beispiel zeigt die folgende Tabelle:
ID 1...999 ->Parameter des Messumformers
ID 1000 1999 -> Parameter eines ersten Sensors
ID 2000 2999 -> Parameter eines zweiten Sensors
ID 3000 3999 -> Parameter eines dritten Sensors

Die gemeinsame Menüstruktur M ist die Vereinigung der Menüstrukturen des Messumformers und des ersten, zweiten und dritten Sensors. Der Identifikator des Parameters ist eindeutig, so dass jederzeit anhand des Identifikators ID entschieden werden kann mit welchem Sensor die Daten kommuniziert werden müssen.

Innerhalb der Menüstruktur wird zwischen den bereits erwähnten hierarchisch strukturierten Daten und deren Darstellung unterschieden. Somit ist eine Darstellung auf vielen Endgeräten möglich; letztlich entscheidet der Messumformer 20 wie die Daten dargestellt werden. Die Struktur beschreibt etwa, dass es eine bestimmte Anzahl und Zeilen mit bestimmtem Inhalt gibt. Die Darstellung selbst entscheidet, mit welcher Schriftart, an welchen Pixelkoordinaten etc. diese Texte dargestellt werden. Beispielweise kann auch Text gekürzt oder mehrzeilig dargestellt werden, wenn dieser zu lang für eine direkte Darstellung ist.

Die messumformerspezifische Menüstruktur M_{M} befindet sich im Messumformer 20. Die sensorspezifische Menüstruktur M_{S} wird mit der messumformerspezifischen Menüstruktur M_{M} dadurch zu der gemeinsamen Menüstruktur M vereint, indem die messumformerspezifischen Menüstruktur M_{M} einen oder mehrere Platzhalter P oder Ankerpunkte A umfasst. Durch den Platzhalter P oder den Ankerpunkt A wird festgelegt wo sich die sensorspezifische Menüstruktur M_{S} eingliedert.

Ein Ankerpunkt A ist eine Referenz auf eine vollständige Menüseite der sensorspezifischen Menüstruktur M_{S}. Der Ankerpunkt A in der gemeinsamen Menüstruktur M wird nur dargestellt, wenn in der feldgerätespezifischen Menüstruktur M_{S} eine entsprechende Menüseite existiert.

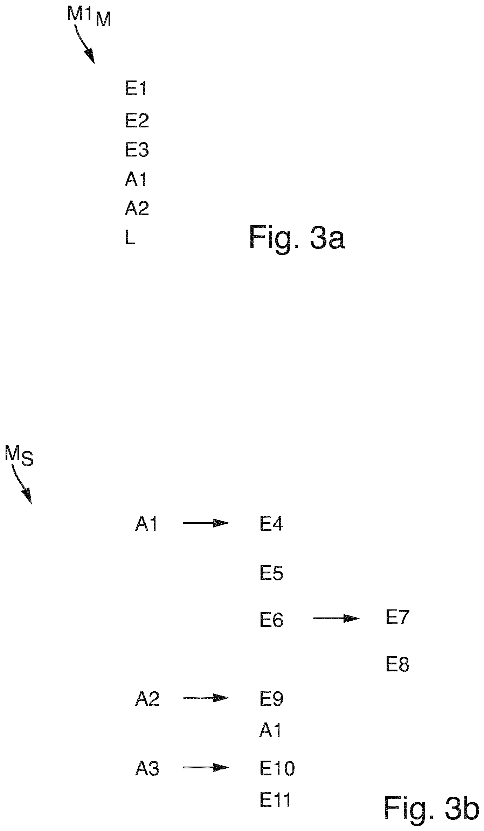

Fig. 3a zeigt ein Beispiel für eine Menüseite M1_{S} eines Messumformers 20. Diese Seite M1s umfasst die Elemente E1, E2, E3. Die Menüseite umfasst zwei Ankerpunkte A1 und A2, die jeweils auf eine separate Menüseite des Sensors zeigen. Durch Auswählen des Ankerpunkts A1 beispielsweise springt man auf die Seite A1 des Sensors, siehe dazu die Menüstruktur M_{S} des Sensors 1 in Fig. 3b. Die Seite A1 umfasst die Elemente E4, E5, E6. E6 wiederum ist ein Untermenü und führt auf eine weitere Seite, diese mit den Elementen E7 und E8. Der Platzhalter A2 umfasst ein Element E9. Der Platzhalter A2 umfasst einen

Platzhalter A1, d.h. innerhalb der Seite A2 kann auf die Seite A1 gesprungen werden. Es ist also möglich nicht nur innerhalb der Hierarchie nach oben und unten zu springen, sondern auch vertikal über die Hierarchie hinweg. In anderen Worten kann ein Ankerpunkt nicht nur einen Eintrittspunkt auf eine andere Seite definieren (z.B. A1 in M1_{M} in Fig. 3a), sondern auch ein Austrittspunkt einer Seite sein (z.B. A1 in A2 in Ms in Fig. 3b).

Die Menüstruktur M_{S} des Sensors 1 umfasst die Seite A3 mit den Elementen E10 und E11. Es gibt in der Menüstruktur M1_{M} des Messumformers 20 allerdings kein pendent zu A3. Deswegen werden solche Elemente und der Seite L in der Menüstruktur M1_{M} gesammelt. Die gemeinsame Menüstruktur M umfasst somit eine Menüseite L, welche alle Ankerpunkte A (in Fig. 3a/b ist das A3) der sensorspezifischen Menüstruktur M_{S} umfasst, die der Messumformer 20 anhand der ihm zu seiner Auslieferungszeit bekannten Ankerpunkte (in Fig. 3a/b ist das lediglich A1 und A2) nicht eingliedern kann.

Ein Platzhalter P ist zumindest ein Element der sensorspezifischen Menüstruktur M_{S} innerhalb einer Menüseite der gemeinsamen Menüstruktur M.

Fig. 4a zeigt eine Menüseite M2_{M} des Messumformers 20. Die Seite M2_{M} umfasst die Elemente E20, E21, E22 und E23. Zwischen E22 und E23 befinden sich die Platzhalter P_{S1} und P_{S2}, wobei S1 bzw. S2 für einen ersten bzw. zweiten Sensor 1 stehen. Der Platzhalter P umfasst die Elemente E30, E31 und E32, siehe Fig. 4b. Die resultierende einzelne Seite M2_{M} nach Anschluss zweier Sensoren 1 an den Messumformer 20 zeigt Fig. 4c. In Klammern werden die jeweiligen Identifikatoren ID gezeigt. Nur wenn beide Sensoren angeschlossen sind werden die Elemente mit den Identifikatoren 2001, 2002, 2003 gezeigt; bei nur einem Sensor werden nur die Elemente mit den Identifikatoren 1001, 1002, 1003 gezeigt.

Eine andere Möglichkeit der bedingten Darstellung kann in dem Parameter an sich liegen. So werden beispielsweise temperaturrelevante Parameter nur dargestellt, wenn der Parameter Temperaturmessung aktiv ausgewählt ist. Im Allgemeinen ist die Menüstruktur abhängig von Zustand von referenzierter Parameter.

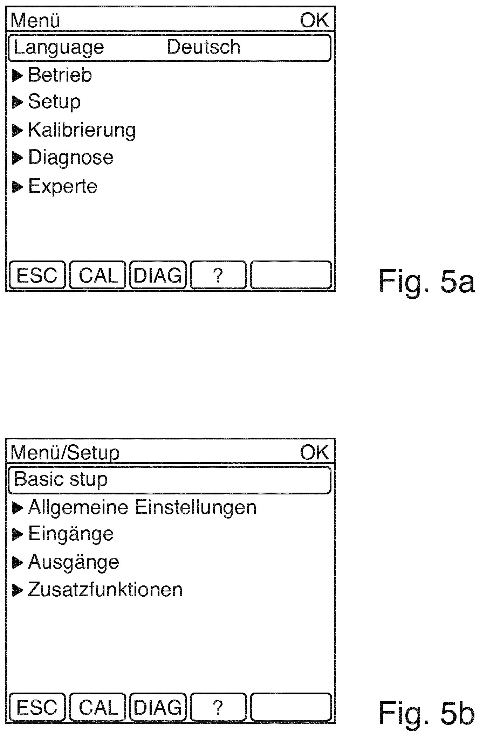

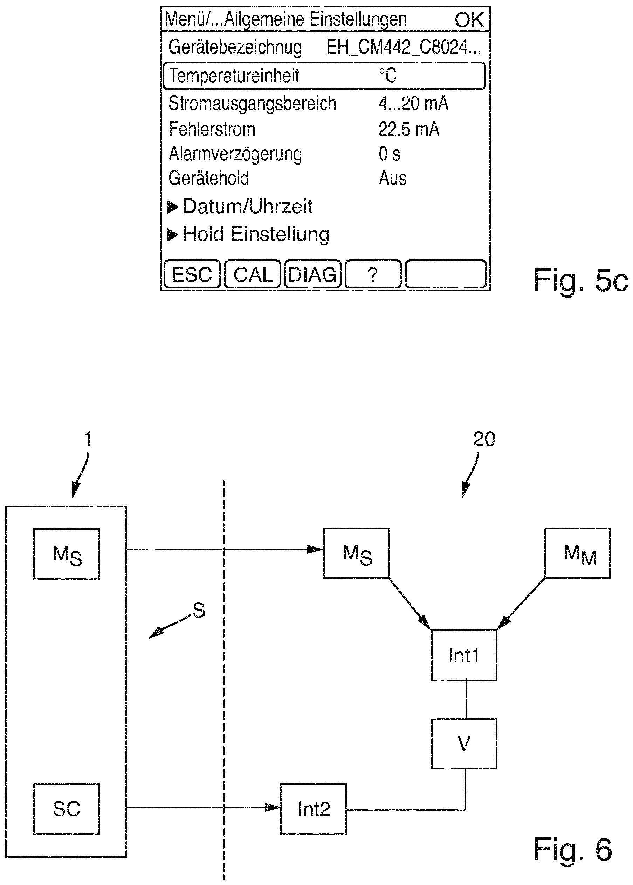

Die Fig. 5a-c zeigen Screenshots vom Display eines Messumformer 20, die verschiedene Situationen der Menüstruktur zeigen. Fig. 5a zeigt eine Menüseite, welche einen Parameter und mehrere Untermenüs enthält. Ein solches Untermenü ist etwa das Element Betrieb . Das dargestellte Element Setup ist ein Ankerpunkt. Klickt ein Anwender darauf, betritt man die Menüseite Setup einer anderen Menüstruktur, siehe Fig. 5b. Das Element Allgemeine Einstellungen etwa ist ebenfalls ein Untermenü und in Fig. 5c dargestellt. Diese Seite enthält bereits gefüllte Platzhalter, nämlich die Elemente Temperatureinheit, Stromausgangsbereich, Fehlerstrom, Alarmverzögerung und Gerätehold. Diese wurden aus einer Menüstruktur eingefügt. Sie wurden über einen Platzhalter z.B. mit Namen AllgEinst referenziert und falls vorhanden eingefügt. Ist dieser Platzhalter nicht vorhanden, so würde nur Gerätebezeichnung, Datum/Uhrzeit und Hold Einstellungen dargestellt werden.

Der Messumformer 20 umfasst einen ersten Interpreter Int1, der die feldgerätespezifische und messumformerspezifische Menüstruktur M_{S}, M_{M} zur Laufzeit einliest, analysiert und ausführt und die gemeinsame Menüstruktur M aufstellt. Alle genannten Parameter und Elemente werden anhand der eindeutigen Identifikatoren ID zugeordnet. Der erste Interpreter Int1 löst die Parameterreferenzen anhand ihrer Identifikatoren ID auf, indem diese über eine Verwaltungseinheit V, also einer Einheit zur Zuordnung der Identifikatoren der Parameter zu den sie verwaltenden Datenbanken, ausgelesen werden.

Fig. 6 zeigt ein Blockdiagramm der Verbindung eines Messumformers 20 und eines Sensors 1, wobei der Sensor 1 wie oben beschrieben angeschlossen wurde. Der Sensor 1 sendet eine eindeutige Identifikation an den Messumformer 20. Anhand dieser Identifikation erkennt der Messumformer 20, ob der Sensor 1, d.h. der Sensortyp für ihn bekannt ist. Der Messumformer 20 umfasst einen zweiten Interpreter Int2, in dem eine Erweiterung 60 ausgeführt wird. Über Schnittstellen kann der Sensor 1 mit dem Messumformer 20 interagieren bzw. über die Schnittstellen können auch verschiedene Interpreter Int2 miteinander Daten austauschen. Dies soll nochmals allgemein erläutert werden.

Zunächst soll der Messumformer 20 gestartet werden, genauer gesagt wird die Betriebssoftware des Messumformers 20 gestartet. Die Betriebssoftware stellt ein oder mehrere Schnittstellen bereit, die von Programmen, hier insbesondere von einem zweiten Interpreter genutzt werden können. Der Begriff Schnittstelle soll hier und im Folgenden als Softwareschnittstelle verstanden werden. Die oben erwähnten physikalischen Schnittstellen 3, 13 hingegen sind als Hardwareeschnittstellen ausgestaltet.

Die Schnittstelle ist der Teil eines Systems, welcher der Kommunikation, d.h. dem Austausch von Informationen, dient. Nur über die Schnittstelle ist die Kommunikation zwischen zwei Teilsystemen möglich. Für ein Teilsystem ist es ohne Belang wie das jeweils andere Teilsystem mit der Information intern umgeht und die etwaigen Antworten zustande kommen. Wie erwähnt geht es hierbei um Softwareschnittstellen. Im Allgemeinen sind Softwareschnittstellen logische Berührungspunkte in einem Softwaresystem: Sie ermöglichen und regeln den Austausch von Kommandos und Daten zwischen verschiedenen Prozessen und Komponenten.

Im nächsten Schritt wird auf dem Messumformer 20 ein zweiter Interpreter Int2 gestartet, wobei der Interpreter Int2 auf die Schnittstelle zugreift. Es können auch mehrere Interpreter Int2 gestartet werden, wobei eine Kommunikation zwischen den verschiedenen Interpretern immer nur über die Schnittstelle erfolgt. Der Interpreter Int2 ist instanziierbar. Im Allgemeinen ist ein Interpreter ein Computerprogramm, das einen Programm-Quellcode im Gegensatz zu Assemblern oder Compilern nicht in eine auf dem System direkt ausführbare Datei übersetzt, sondern den Quellcode einliest, analysiert und direkt ausführt. Die Abarbeitung des Programms erfolgt Schrittweise zur Laufzeit des Programmes ohne vorab in den Maschinencode des Zielsystems umgesetzt zu werden.

In einer ersten Ausführung ist ein Emulator, genauer ein Software-Emulator, als Interpreter Int2 zu verstehen. Ein Emulator ist ein Interpreter, da dieser den Maschinencode des Gastsystems befehlsweise mittels eines virtuellen Prozessors abarbeitet. Im dargelegten Beispiel führt der Interpreter Int2 (aka Emulator) den Maschinencode des Gastsystems, also einen an den Messumformer 20 angeschlossenen Sensor 1 bzw. dessen Softwareinterpretation (sensorspezifische Software , siehe unten), befehlsweise auf einem virtuellen Prozessor auf dem Messumformer 20 aus.

Im Allgemeinen wird als Emulator ein System bezeichnet, das ein anderes in bestimmten Teilaspekten nachbildet. Das nachgebildete System erhält die gleichen Daten, führt gleiche oder zumindest vergleichbare Programme aus und erzielt möglichst die gleichen Ergebnisse wie das zu emulierende System. Software-Emulatoren sind Programme, die einen Computer nachbilden und es so ermöglichen, Software für diesen Computer auf einem Computer mit einer anderen Architektur zu verwenden.

Im Interpreter Int2 wird zumindest eine Erweiterung (pro Interpreter Int2) ausgeführt. In einer Ausgestaltung wird genau eine Erweiterung ausgeführt. Es werden mehrere Interpreter Int2 pro Messumformer 20 ausgeführt.

Grundsätzlich umfasst ein Interpreter Int2 auch die Sonderform einer virtuellen Maschine, die Teile des Maschinencodes des Gastsystems auf dem Hostsystem ausführen kann.

In einer Ausführungsform ist der Interpreter Int2 nicht als Emulator ausgestaltet, sondern der Interpreter ist als Skriptspracheninterpreter ausgestaltet. In einer Ausführungsform ist diese Skriptsprache Lua. Andere Beispiele sind Python, VBA, Lisp, VBScript oder JScript. Grundsätzlich ist es auch möglich verschiedene Skriptspracheninterpreter auf einem Messumformer 20 zu installieren und zu starten. Wie erwähnt kommunizieren die einzelnen Interpreter Int2 mittels Schnittstellen S miteinander. Werden diese Schnittstellen S in den Interpretern Int2 dann entsprechend implementiert, ist auch eine Kommunikation zwischen den verschiedenen Interpretern Int2 möglich.

Ist der Interpreter Int2 gestartet, wird anschließend darauf eine Erweiterung ausgeführt. Eine Erweiterung ist Software, die nicht primär Teil des Messumformers 20 ist, d.h. diese ist explizit nicht Bestandteil der Betriebssoftware. Die Erweiterung wird zur Laufzeit nachgeladen.

Alle sensorspezifischen Komponenten sind in einer ersten Ausführungsform im Sensor 1 gespeichert. Die sensorspezifischen Komponenten sollen im Folgenden auch als sensorspezifische Software SC bezeichnet werden. Im Sinne dieser Anmeldung ist die sensorspezifische Software S eine Erweiterung. Bei der sensorspezifischen Software S handelt es sich also um Signalverarbeitung von Sensordaten, um einen oder mehrere Zustandsautomaten, Parametrierung des Sensors, Menüstruktur Ms des Sensors oder Feldbusanbindung des Sensors. Für diese Anmeldung soll mit der Referenz S die Gesamtheit der sensorspezifischen Software gemeint sein, die besteht aus der Menüstruktur Ms sowie den anderen Teilen der sensorspezifischen Software S, genannt der Sensorcode SC.

Diese Softwarekomponenten S liegen also physisch im Sensor 1, etwa in Form einer kompletten Software als Bytecode. Sie werden jedoch auf dem Messumformer 20 in einem Interpreter Int2 ausgeführt. Für die Ausführung der Menüstruktur dient der erste Interpreter Int1, siehe unten. Hierzu müssen die sensorspezifischen Komponenten einmalig auf den Messumformer 20 geladen werden, um ihn anschließend innerhalb seines Interpreters Int2 auszuführen. Dies erfolgt üblicherweise nach Anschließen des Sensors 1 an den Messumformer 20, wobei das für den Sensor 1 erforderliche Datenkommunikationsprotokoll zwischen Messumformer 20 und Sensor 1 verwendet wird.

Der Interpreter Int2 ist auf allen möglichen Messumformern 20 als Gleichteil ausgeführt, lediglich die notwendigen Schnittstellen zu seinen eigenen Komponenten wie z.B. dem Display sind messumformerspezifisch und werden entsprechend angepasst. Dabei kann der Interpreter Int2 etwa in einer plattformübergreifenden Programmiersprache wie C geschrieben sein, sodass der Quellcode des Interpreters an sich für alle verschiedenen Plattformen dann gleich ist.

Für jeden angeschlossenen Sensor 1 am Messumformer 20 wird ein eigener Interpreter Int2 verwendet. Jeder Sensor 1, bzw. dessen sensorspezifische Software S wird also in einem separaten Interpreter Int2 ausgeführt.

Alternativ zur Speicherung der sensorspezifischen Software S im Sensor 1, die bei Bedarf auf den Messumformer 20 heruntergeladen wird, befindet sich diese auf einer Speicherkarte (etwa eine SD-Karte), die in den Messumformer 20 gesteckt und auf diesen übertragen wird. In einer Alternative baut der Messumformer 20 eine Datenverbindung ins Internet auf und lädt sich die für den jeweiligen Sensor passende Software herunter. Alternativ wird eine Verbindung etwa zum Leitsystem 30 aufgebaut und das Leitsystem 30 hält die entsprechende Software bereit. Anhand einer eindeutigen Kennung des Sensors 1 wird die jeweils richtige Software gefunden. In einer Alternative ist die sensorspezifische Software bereits auf dem Messumformer 20 vorhanden. Dies kann etwa bei älteren Sensoren der Fall sein, wobei deren spezifische Software bereits bei Auslieferung des Messumformers 20 darauf gespeichert ist.

Wie erwähnt umfasst die sensorspezifische Software S die Menüstruktur Ms des Sensors 1 und dessen Softwarecode SC (siehe oben). Der Messumformer 20 umfasst einen eigenen ersten Interpreter Int1, welcher die sensorspezifische Menüstruktur Ms interpretiert und entsprechend systemspezifisch darstellt.

Dieses Konzept bietet neben der generischen Ankopplung von Sensoren 1 und Messumformern 20 im Sinne der Menüstruktur den Vorteil, dass diese durch einen eigenen Interpreter Int1 abgearbeitet wird, der völlig losgelöst vom zweiten Interpreter Int2 arbeiten kann.

### Bezugszeichenliste

- 1: Sensor
- 2: Erster Kupplungskörper
- 3: Erste physikalische Schnittstelle
- 4: Sensorelement
- 10: Sensoranordnung
- 11: Anschlusselement
- 12: Zweiter Kupplungskörper
- 13: Zweite physikalische Schnittstelle
- 20: Messumformer
- 21: Kabel
- 22: Display
- 23: Bedienelemente
- 24: Drahtlosmodul
- 30: übergeordnete Einheit
- 31: Kabel
- µCA: intelligente Einheit in 11
- µCS: intelligente Einheit in 1
- A: Ankerpunkt
- E: Element einer Menüseite
- M: gemeinsame Menüstruktur
- L: Menüseite, die unbekannte Menüseiten sammelt
- M1-M11: Menüseite von M
- M1_{M}-M6_{M}: Menüseite von M_{M}
- M1_{S}-M4_{S}: Menüseite von M_{S}
- ID: Identifikator
- Int1: Erster Interpreter
- Int2: Zweiter Interpreter
- P: Platzhalter
- S: sensorspezifische Software
- SC: Sensorcode
- V: Verwaltungseinheit
- _{M} (Subskript M): messumformerspezifische Menüstruktur
- _{S} (Subskript S): sensorspezifische Menüstruktur

## Patentansprüche

1. Verfahren zur Aufstellung einer Menüstruktur auf einem Messumformer (20) der Prozessautomatisierungstechnik, wobei der Messumformer (20) mit zumindest einem Feldgerät (1) verbindbar ist, umfassend zumindest die Schritte:
Verbinden des Feldgeräts (1) mit dem Messumformer (20), Übertragen einer feldgerätespezifischen Menüstruktur (M_{S}) vom Feldgerät (1) an den Messumformer (20), wenn sich diese noch nicht auf dem Messumformer (20) befindet, und
Vereinen der feldgerätespezifischen Menüstruktur (M_{S}) mit einer messumformerspezifischen Menüstruktur (M_{M}) zu einer gemeinsamen Menüstruktur (M), wobei sich die messumformerspezifische Menüstruktur (M_{M}) im Messumformer (20) befindet,
mittels zumindest einem Ankerpunkt (A) oder einem Platzhalter (P) in der messumformerspezifischen Menüstruktur (M_{M}), wobei durch den Ankerpunkt (A) oder den Platzhalter (P) festgelegt ist, wo sich die feldgerätespezifischen Menüstruktur (M_{S}) in die messumformerspezifische Menüstruktur (M_{M}) eingliedert,
wobei es sich bei dem Ankerpunkt (A) um eine Referenz auf eine vollständige Menüseite der feldgerätespezifischen Menüstruktur (M_{S}) handelt,
wobei der Ankerpunkt (A) in der gemeinsamen Menüstruktur (M) nur dargestellt wird, wenn in der feldgerätespezifischen Menüstruktur (M_{S}) eine entsprechende Menüseite existiert, und
wobei es sich bei dem Platzhalter (P) um zumindest ein Element der feldgerätespezifischen Menüstruktur (M_{S}) innerhalb einer Menüseite der gemeinsamen Menüstruktur (M) handelt.

2. Verfahren nach Anspruch 1,
wobei innerhalb der feldgerätespezifischen und messumformerspezifischen Menüstruktur (M_{S}, M_{M}) zwischen hierarchisch strukturierten Daten und deren Darstellung unterschieden wird,
wobei es sich bei den hierarchisch strukturierten Daten zumindest um statische Texte oder Parameter handelt.

3. Verfahren nach Anspruch 1,
wobei ausschließlich die hierarchisch strukturierten Daten vom Feldgerät (1) an den Messumformer (20) übertragen werden.

4. Verfahren nach zumindest einem der Ansprüche 1 bis 3,
wobei der Messumformer (20) einen ersten Interpreter umfasst, der die feldgerätespezifische und messumformerspezifische Menüstruktur (M_{S}, M_{M}) zur Laufzeit einliest, analysiert und ausführt und die gemeinsame Menüstruktur (M) aufstellt.

5. Verfahren nach zumindest einem der Ansprüche 2 bis 4,
wobei die messumformerspezifische Menüstruktur (M_{M}) messumformerspezifische Parameter referenziert, die im Messumformer (20) in einer ersten Datenbank gespeichert sind,
wobei die feldgerätespezifische Menüstruktur (M_{S}) feldgerätespezifische Parameter umfasst, die in einer dem Feldgerät (1) zugeordneten zweiten Datenbank gespeichert sind,
wobei der Messumformer (20) eine Verwaltungseinheit zumindest zur Verwaltung der Parameter umfasst, und die Verwaltungseinheit den angefragten Parameter aus der ersten oder zweiten Datenbank bezieht.

6. Verfahren nach Anspruch 5,
wobei das Feldgerät (1) die zweite Datenbank umfasst und die feldgerätespezifischen Parameter darin gespeichert sind.

7. Verfahren nach Anspruch 5,
wobei der Messumformer (20) zumindest einen zweiten Interpreter zur Ausführung einer Erweiterung umfasst,
wobei nach Anschluss des Feldgeräts (1) an den Messumformer (20) feldgerätespezifische Software vom Feldgerät (1) an den Messumformer (20) übertragen wird, wenn sich diese noch nicht auf dem Messumformer (20) befindet,
wobei die feldgerätespezifische Software als Erweiterung ausgestaltet ist,
wobei die feldgerätespezifische Software die feldgerätespezifische Menüstruktur (M_{S}) umfasst, und
wobei die feldgerätespezifische Software die zweite Datenbank umfasst und die feldgerätespezifischen Parameter darin gespeichert sind.

8. Verfahren nach zumindest einem der Ansprüche 2 bis 7,
wobei jeder Parameter, sei es ein feldgerätespezifischer oder ein messumformerspezifischer Parameter, nach Vereinigung der beiden Menüstrukturen einen eindeutigen Identifikator (ID) zugewiesen bekommt.

9. Verfahren nach zumindest einem der Ansprüche 1 bis 8,
wobei die darzustellende Menüseite erst gerendert wird, wenn alle auf der Menüseite darzustellenden hierarchisch strukturierten Daten auf dem Messumformer (20) vorhanden sind.

10. Verfahren nach zumindest einem der Ansprüche 1 bis 9,
wobei die feldgerätespezifische Menüstruktur (M_{S}) mit der messumformerspezifischen Menüstruktur (M_{M}) menüseitenweise vereint wird.

11. Verfahren nach zumindest einem der Ansprüche 1 bis 10,
wobei die feldgerätespezifische Menüstruktur (M_{S}) mit der messumformerspezifischen Menüstruktur (M_{M}) elementweise innerhalb einer Menüseite vereint wird.

12. Verfahren nach zumindest einem der Ansprüche 2 bis 11,
wobei die Menüstruktur vom Zustand referenzierter Parameter abhängig ist.

13. Verfahren nach zumindest einem der Ansprüche 1 bis 12,
wobei der Ankerpunkt (A) einen Eintrittspunkt oder einen Austrittspunkt definiert.

14. Verfahren nach zumindest einem der Ansprüche 1 bis 13,
wobei die gemeinsame Menüstruktur (M) eine Menüseite (L) umfasst, welche alle Ankerpunkte (A) der feldgerätespezifischen Menüstruktur (M_{S}) umfasst, die der Messumformer (20) anhand der ihm zu seiner Auslieferungszeit bekannten Ankerpunkte (A) nicht eingliedern kann.

15. Messumformer (20), der zur Ausführung eines Verfahrens nach zumindest einem der Ansprüche 1 bis 14 ausgestaltet ist.

## Claims

1. Procedure for the creation of a menu structure on a transmitter (20) used in process automation engineering, wherein the transmitter (20) can be connected to at least one field device (1), wherein said procedure comprises at least the following steps:
Connection of the field device (1) to the transmitter (20), Transmission of a field device-specific menu structure (M_{S}) from the field device (1) to the transmitter (20) if this menu structure is not yet found on the transmitter (20), and
Combination of the field device-specific menu structure (M_{S}) with a transmitter-specific menu structure (M_{M}) to form a common menu structure (M), wherein the transmitter-specific menu structure (M_{M}) is found in the transmitter (20), by means of at least one anchor point (A) or a placeholder (P) in the transmitter-specific menu structure (M_{M}), wherein the anchor point (A) or the placeholder (P) defines where the field device-specific menu structure (M_{S}) is integrated into the transmitter-specific menu structure (M_{M}),
wherein the anchor point (A) is a reference to a complete menu page of the field device-specific menu structure (M_{S}),
wherein the anchor point (A) is only displayed in the common menu structure (M) if a corresponding menu page exists in the field device-specific menu structure (M_{S}), and
wherein the placeholder (P) is at least an element of the field device-specific menu structure (M_{S}) within a menu page of the common menu structure (M).

2. Procedure as claimed in Claim 1,
wherein, within the field device-specific menu structure (M_{S}) and the transmitter-specific menu structure (M_{M}), a distinction is made between hierarchically structured data and their presentation,
wherein the hierarchically structured data are at least static texts or parameters.

3. Procedure as claimed in Claim 1,
wherein only the hierarchically structured data are transmitted from the field device (1) to the transmitter (20).

4. Procedure as claimed in at least one of the Claims 1 to 3,
wherein the transmitter (20) comprises a first interpreter, which reads, analyses and executes the field device-specific menu structure (M_{S}) and the transmitter-specific menu structure (M_{M}) at run time and creates the common menu structure (M).

5. Procedure as claimed in at least one of the Claims 2 to 4,
wherein the transmitter-specific menu structure (M_{M}) makes reference to transmitter-specific parameters, which are saved in the transmitter (20) in a first database,
wherein the field device-specific menu structure (M_{S}) comprises field device-specific parameters which are saved in a second database that is assigned to the field device (1),
wherein the transmitter (20) comprises an administration unit at least for the management of the parameters, and the administration unit obtains the requested parameter from the first or second database.

6. Procedure as claimed in Claim 5,
wherein the field device (1) comprises the second database and the field device-specific parameters saved in the database.

7. Procedure as claimed in Claim 5,
wherein the transmitter (20) comprises at least a second interpreter for the execution of an extension,
wherein, once the field device (1) is connected to the transmitter (20), field device-specific software is transmitted from the field device (1) to the transmitter (20) if this software is not yet on the transmitter (20),
wherein the field device-specific software is designed as an extension, wherein the field device-specific software comprises the field device-specific menu structure (M_{S}), and
wherein the field device-specific software comprises the second database and the field device-specific parameters saved in the database.

8. Procedure as claimed in at least one of the Claims 2 to 7,
wherein each parameter - be that a field device-specific parameter or a transmitter-specific parameter - is assigned a unique identifier (ID) when the two menu structures are combined.

9. Procedure as claimed in at least one of the Claims 1 to 8,
wherein the menu page to be presented is only rendered once all the hierarchically structured data that are to be presented on the menu page are available on the transmitter (20).

10. Procedure as claimed in at least one of the Claims 1 to 9,
wherein the field device-specific menu structure (M_{S}) is combined with the transmitter-specific menu structure (M_{M}) by menu page.

11. Procedure as claimed in at least one of the Claims 1 to 10,
wherein the field device-specific menu structure (M_{S}) is combined with the transmitter-specific menu structure (M_{M}) by elements within a menu page.

12. Procedure as claimed in at least one of the Claims 2 to 11,
wherein the menu structure depends on the state of the referenced parameters.

13. Procedure as claimed in at least one of the Claims 1 to 12,
wherein the anchor point (A) defines a point of entry or a point of exit.

14. Procedure as claimed in at least one of the Claims 1 to 13,
wherein the common menu structure (M) comprises a menu page (L) which comprises all the anchor points (A) of the field device-specific menu structure (M_{S}) that the transmitter (20) cannot integrate on the basis of the anchor points it was aware of at the time of delivery.

15. Transmitter (20) which is designed to execute a procedure as claimed in at least one of the Claims 1 to 14.

## Revendications

1. Procédé destiné à la création d'une structure de menu sur un transmetteur (20) de la technique d'automatisation des process, le transmetteur (20) pouvant être relié avec au moins un appareil de terrain (1), lequel procédé comprend au moins les étapes suivantes :
Liaison de l'appareil de terrain (1) avec le transmetteur (20), Transmission, de l'appareil de terrain (1) au transmetteur (20), d'une structure de menu spécifique à l'appareil de terrain (M_{S}), dans la mesure où la structure ne se trouve pas encore sur le transmetteur (20), et
Réunion de la structure de menu spécifique à l'appareil de terrain (M_{S}) avec une structure de menu spécifique au transmetteur (M_{M}) en une structure de menu commune (M), la structure de menu spécifique au transmetteur (M_{M}) se trouvant dans le transmetteur (20),
au moyen d'un point d'ancrage (A) ou d'un emplacement réservé (P) dans la structure de menu spécifique au transmetteur (M_{M}), le point d'ancrage (A) ou l'emplacement réservé (P) définissant l'endroit où la structure de menu spécifique à l'appareil de terrain (M_{S}) s'intègre,
procédé pour lequel il s'agit, concernant le point d'ancrage (A), d'une référence à une page de menu complète de la structure de menu spécifique à l'appareil de terrain (M_{S}),
procédé pour lequel le point d'ancrage (A) n'est représenté dans la structure de menu commune (M) que s'il existe une page de menu correspondante dans la structure de menu spécifique à l'appareil de terrain (M_{S}), et
procédé pour lequel il s'agit, concernant l'emplacement réservé (P), d'au moins un élément de la structure de menu spécifique à l'appareil de terrain (M_{S}) au sein d'une page de menu de la structure de menu commune (M).

2. Procédé selon la revendication 1,
pour lequel il est fait la distinction, au sein de la structure de menu spécifique à l'appareil de terrain (M_{S}) et de la structure de menu spécifique au transmetteur (M_{M}), entre les données structurées de manière hiérarchique et leur représentation,
pour lequel il s'agit, concernant les données structurées de manière hiérarchique, au moins de textes ou de paramètres statiques.

3. Procédé selon la revendication 1,
pour lequel seules les données structurées de manière hiérarchique sont transmises de l'appareil de terrain (1) au transmetteur (20).

4. Procédé selon au moins l'une des revendications 1 à 3,
pour lequel le transmetteur (20) comprend un premier interpréteur, qui lit, analyse et exécute la structure de menu spécifique à l'appareil de terrain (M_{S}) et la structure de menu spécifique au transmetteur (M_{M}) pendant la durée de fonctionnement, et qui crée la structure de menu commune (M).

5. Procédé selon au moins l'une des revendications 2 à 4,
pour lequel la structure de menu spécifique au transmetteur (M_{M}) fait référence à des paramètres spécifiques au transmetteur, lesquels paramètres sont enregistrés dans une première base de données,
la structure de menu spécifique à l'appareil de terrain (M_{S}) comprenant des paramètres spécifiques à l'appareil de terrain, lesquels paramètres sont enregistrés dans une deuxième base de données, attribuée à l'appareil de terrain (1),
le transmetteur (20) comprenant une unité de gestion au moins pour la gestion des paramètres, et l'unité de gestion obtenant les paramètres demandés à partir de la première ou de la deuxième base de données.

6. Procédé selon la revendication 5,
pour lequel l'appareil de terrain (1) comprend la deuxième base de données et les paramètres spécifiques à l'appareil de terrain qui y sont enregistrés.

7. Procédé selon la revendication 5,
pour lequel le transmetteur (20) comprend au moins un deuxième interpréteur pour l'exécution d'une extension,
pour lequel, après le raccordement de l'appareil de terrain (1) au transmetteur (20), un logiciel spécifique à l'appareil de terrain est transmis de l'appareil de terrain (1) au transmetteur (20), dans la mesure où le dit logiciel ne se trouve pas encore sur le transmetteur (20),
le logiciel spécifique à l'appareil de terrain étant conçu en tant qu'extension,
le logiciel spécifique à l'appareil de terrain comprenant la structure de menu spécifique à l'appareil de terrain (M_{S}), et
le logiciel spécifique à l'appareil de terrain comprenant la deuxième base de données et les paramètres spécifiques à l'appareil de terrain y étant enregistrés.

8. Procédé selon au moins l'une des revendications 2 à 7,
pour lequel chaque paramètre, qu'il s'agisse d'un paramètre spécifique à l'appareil de terrain ou d'un paramètre spécifique au transmetteur, se voit attribuer un identificateur (ID) unique après la réunion des deux structures de menu.

9. Procédé selon au moins l'une des revendications 1 à 8,
pour lequel la page de menu à représenter n'est affichée que si toutes les données structurées de manière hiérarchique, devant être représentées sur la page de menu, sont présentes sur le transmetteur (20).

10. Procédé selon au moins l'une des revendications 1 à 9,
pour lequel la structure de menu spécifique à l'appareil de terrain (M_{S}) est réunie avec la structure de menu spécifique au transmetteur (M_{M}) par pages de menu.

11. Procédé selon au moins l'une des revendications 1 à 10,
pour lequel la structure de menu spécifique à l'appareil de terrain (M_{S}) est réunie avec la structure de menu spécifique au transmetteur (M_{M}) par éléments au sein d'une page de menu.

12. Procédé selon au moins l'une des revendications 2 à 11,
pour lequel la structure de menu dépend de l'état des paramètres référencés.

13. Procédé selon au moins l'une des revendications 1 à 12,
pour lequel le point d'ancrage (A) définit un point d'entrée ou un point de sortie.

14. Procédé selon au moins l'une des revendications 1 à 13,
pour lequel la structure de menu commune (M) comprend une page de menu (L), qui comprend tous les points d'ancrage (A) de la structure de menu spécifique à l'appareil de terrain (M_{S}), page de menu que le transmetteur (20) ne peut pas intégrer au moyen des points d'ancrage qui lui sont connus au moment de la livraison.

15. Transmetteur (20) conçu pour l'exécution d'un procédé selon au moins l'une des revendication 1 à 14.
